# EUROPEAN PATENT APPLICATION

(11) **EP 4 614 943 A2**
(43) Date of publication of application: **10.09.2025**
(21) Application number: 25161099.4
(22) Date of filing: 28.02.2025
(51) Int. Cl.: H04L 61/5014

(54) **CONFIGURATION OF A FIXED WIRELESS ACCESS DEPLOYMENT**

(30) Priority: 07.03.2024 IN 202441016233; 25.10.2024 US 202418926833
(71) Applicant: Juniper Networks, Inc., Sunnyvale, CA 94089-1206 (US)
(72) Inventor: PADEBETTU, Venkatesh, Sunnyvale, 94089 (GB)
(74) Representative: D Young & Co LLP

(57) **Abstract**

A distribution point unit (DPU) is associated with an fixed wireless access (FWA) deployment. The DPU identifies configuration information that indicates respective correspondences between a plurality of ports of the DPU and address identifiers of a plurality of access point devices. The DPU determines that the plurality of ports of the DPU are connected to the plurality of access point devices and performs a verification operation to determine that the plurality of access point devices are connected to the plurality of ports in accordance with the configuration information. The DPU obtains, based on the configuration information, respective Internet protocol (IP) addresses associated with the plurality of access point devices. The DPU transmits, via respective connections between the plurality of ports of the DPU and the plurality of access point devices, the respective IP addresses to the plurality of access point devices.

## Description

### CROSS-REFERENCE TO RELATED APPLICATION

This Patent Application claims priority to India Patent Application No. 202441016233, filed on March 7, 2024, and entitled "OPTIMAL FIXED WIRELESS ACCESS (FWA) DEPLOYMENTS." The disclosure of the prior Application is considered part of and is incorporated by reference into this Patent Application.

### BACKGROUND

Fixed wireless access (FWA) provides wireless broadband connectivity between two fixed points (e.g., between a network base station and an FWA device in a customer's home). FWA uses radio waves to send high-speed signals that offer data transfer to and from consumer devices (e.g., user equipment).

### SUMMARY

Particular aspects are set out in the appended independent claims. Various optional embodiments are set out in the dependent claims.

In some implementations, a distribution point unit (DPU) associated with an FWA deployment includes one or more memories; and one or more processors to: identify configuration information that indicates respective correspondences between a plurality of ports of the DPU and address identifiers of a plurality of access point devices; obtain, based on the configuration information, respective Internet protocol (IP) addresses associated with the plurality of access point devices; and transmit, via respective connections between the plurality of ports of the DPU and the plurality of access point devices, the respective IP addresses to the plurality of access point devices.

In some implementations, computer-readable medium comprising (e.g. storing and/or conveying) a set of instructions includes one or more instructions that, when executed by one or more processors of a DPU associated with an FWA deployment, cause the DPU to: identify configuration information that indicates respective correspondences between a plurality of ports of the DPU and address identifiers of a plurality of access point devices; determine that the plurality of ports of the DPU are connected to the plurality of access point devices; and perform a verification operation to determine that the plurality of access point devices are connected to the plurality of ports in accordance with the configuration information.

In some implementations, a method includes obtaining, by a DPU associated with an FWA deployment, respective IP addresses associated with a plurality of access point devices connected to a plurality of ports of the DPU; and transmitting, by the DPU, via respective connections between the plurality of ports of the DPU and the plurality of access point devices, the respective IP addresses to the plurality of access point devices.

### BRIEF DESCRIPTION OF THE DRAWINGS

Figs. 1A-1E are diagrams of an example implementation associated with a configuration of an FWA deployment.
Fig. 2 is a diagram of an example environment in which systems and/or methods described herein may be implemented.
Fig. 3 is a diagram of example components of a device associated with a configuration of an FWA deployment.
Fig. 4 is a diagram of example components of a device associated with a configuration of an FWA deployment.
Fig. 5 is a flowchart of an example process associated with a configuration of an FWA deployment.

### DETAILED DESCRIPTION

The following detailed description of example implementations refers to the accompanying drawings. The same reference numbers in different drawings may identify the same or similar elements.

In an FWA deployment, such as for a multi-dwelling unit (MDU), a plurality of customer premises equipment (CPEs) are respectively associated with dwellings of the MDU, and can establish connectivity between a wireless network (e.g., a core network) and devices associated with the dwellings. In some cases, a CPE can also provide physical layer termination in a broadband deployment (e.g., that utilizes passive optical network (PON) technology or data over cable system interface specification (DOCSIS) technology). Further, the CPE (e.g., when provided and/or controlled by an operator of the broadband deployment) can be managed remotely (e.g., using proprietary methods and/or methods defined in broadband forum (BBF) technical report 069 (TR-069)).

In many cases, in the FWA deployment, each CPE is connected to an access point device (AP) (e.g., a network device that includes a wired and/or wireless router, such as a WiFi router) at a dwelling and is configured to provide Internet service to the dwelling, such as for a local area network (LAN) at the dwelling. Often, however, the CPE and the AP both apply network address translation (NAT) and network address and port translation (NAPT) for data packets traversing the devices, which can increase latency associated with the data packets traversing the devices (e.g., because of duplicative translation processes and/or a need for application layer gateways (ALGs) to assist with the translation processes).

Additionally, in the FWA deployment, the plurality of CPEs are connected to a DPU, which is connected to an FWA gateway (FWA-GW) (e.g., an FWA residential gateway, or a similar type of FWA device), which provides wireless connectivity, such as through radio links, between the DPU and a RAN associated with a core network. This enables communication between the plurality of APs and the core network. Accordingly, the DPU is configured (e.g., as a layer 2 switch) to aggregate traffic to and from APs of the dwellings of the MDU. Notably, however, for an AP to communicate traffic with the core network, the traffic must traverse between the AP and the FWA-GW via both the DPU and a corresponding CPE (e.g., that is configured to provide a termination point only for the AP).

Some implementations described herein enable a configuration of an FWA deployment, such as for an MDU, that includes a DPU, a plurality of APs (that are connected to a plurality of ports of the DPU via respective connections), and an FWA-GW that is associated with a core network. The DPU identifies configuration information that indicates respective correspondences between the plurality of ports of the DPU and address identifiers of the plurality of APs. The DPU then obtains (e.g., based on the configuration information) respective IP addresses associated with the plurality of APS), such as by communicating with one or more devices associated with the core network. The DPU then transmits (e.g., via the respective connections between the plurality of ports of the DPU and the plurality of access point devices) the respective IP addresses to the plurality of access point devices.

In this way, the configuration of the FWA deployment eliminates a need for CPEs (e.g., for a multiple dwellings scenario associated with an MDU), such as by enhancing a capability of the DPU (e.g., by enhancing the DPU to have capabilities beyond only aggregating traffic to and from APs of the dwellings of the MDU). For example, the DPU is enhanced to obtain IP addresses for a plurality of APs that are directly connected to the DPU. This in turn conserves computing resources (e.g., processing resources, memory resources, communication resources, and/or power resources, among other examples), networking resources, and/or other resources that would have other been consumed by including CPEs in the configuration of the FWA deployment. Further, only an AP needs to apply NAT and NAPT for data packets communicated by the AP, which decreases latency associated with the data packets (e.g., because a CPE is not present to perform duplicative translation processes and/or there is no need for ALGs to assist with the translation processes).

Further, because the DPU has an enhanced functionality (e.g., a dynamic host configuration protocol (DHCP) relay functionality) that associates ports of the DPU with the IP addresses of the APs, identifying, at the DPU, traffic associated with a particular dwelling of the MDU for special handling (e.g., for billing purposes, accounting purposes, legal purposes, and/or other purposes) is easier. For example, some implementation enable identification, at the DPU, of traffic associated with a dwelling that is to be the subject of legal intercept analysis, and therefore only this traffic, which is associated with a particular port of the DPU, needs to be intercepted and analyzed (as opposed to interception of all traffic that is handled by the DPU to identify traffic of interest). This improves a performance of the DPU and maintains the confidentiality and security of traffic that is not the subject of legal intercept analysis.

Further, in some implementations, the DPU may be provisioned dynamically by an operator (e.g., of the configuration of the FWA deployment), such as via a remote client device, which reduces a need to manually configure the DPU. Moreover, the DPU may provide telemetry data (e.g., in real-time or near real-time) to the client device, which may enable the client device to remotely identify faults (e.g., that are associated with the DPU and/or the configuration of the FWA deployment).

In some implementations, the DPU may perform (e.g., prior to obtaining the respective IP addresses) a verification operation to determine that the plurality of access point devices are connected to the plurality of ports in accordance with the configuration information. In this way, the DPU enables a security functionality to ensure that the plurality of APs are correctly connected to the DPU before attempting to obtain the respective IP addresses. This improves a security of the plurality of APs, the DPU, and the core network.

In some implementations, the DPU may be able to connect to multiple FWA-GWs that are respectively associated with different core networks. This is not otherwise possible for a non-enhanced DPU in a typical configuration of an FWA deployment. Accordingly, the configuration information may further indicate that address identifiers of a first set of one or more APs, of the plurality of APs, are associated with a first core network, that address identifiers of a second set of one or more APs, of the plurality of APs, are associated with a second core network, and/or so on. The DPU, based on the configuration, then may communicate with the first core network (e.g., via a first FWA-GW) to obtain a first set of one or more IP addresses, may communicate with the second core network (e.g., via a second FWA-GW) to obtain a second set of one or more IP addresses, and/or so on. Accordingly, the DPU may transmit the first set of one or more IP addresses to the first set of one or more APs, may transmit the second set of one or more IP addresses to the second set of one or more APs, and/or so on. In this way, the DPU can support communications between the plurality of APs and multiple core networks, which is not otherwise possible using a single DPU.

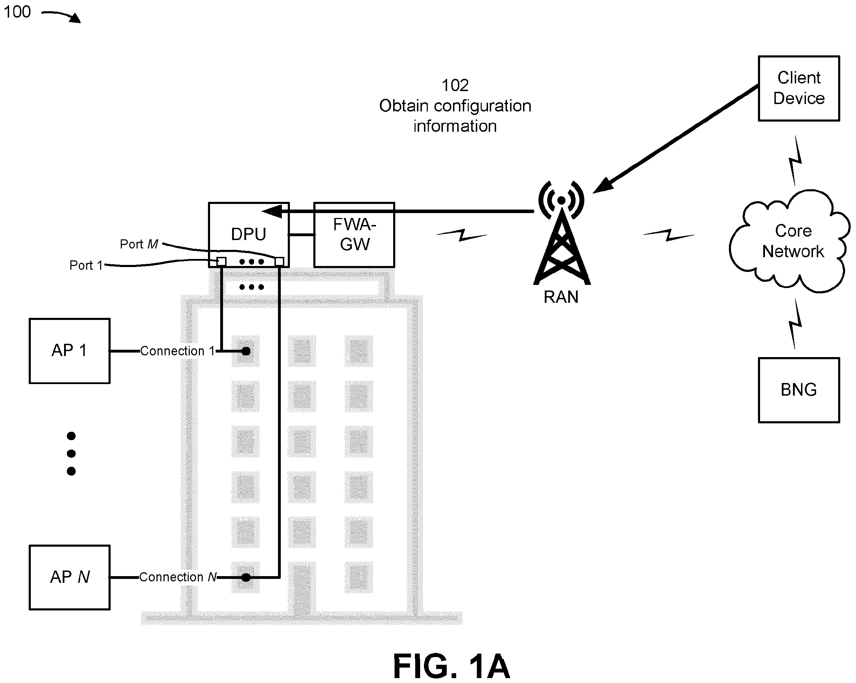

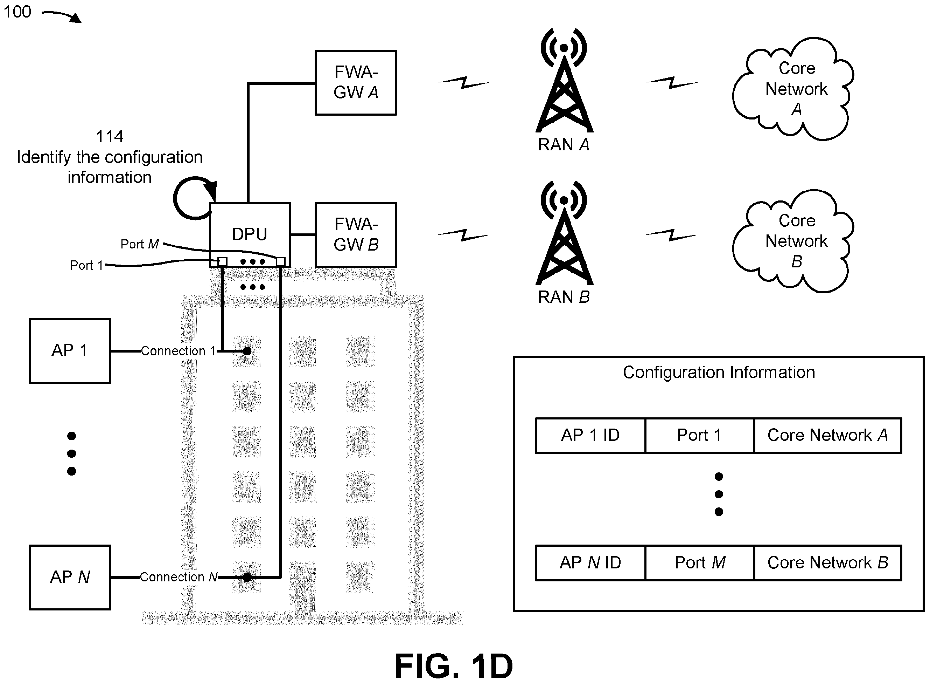

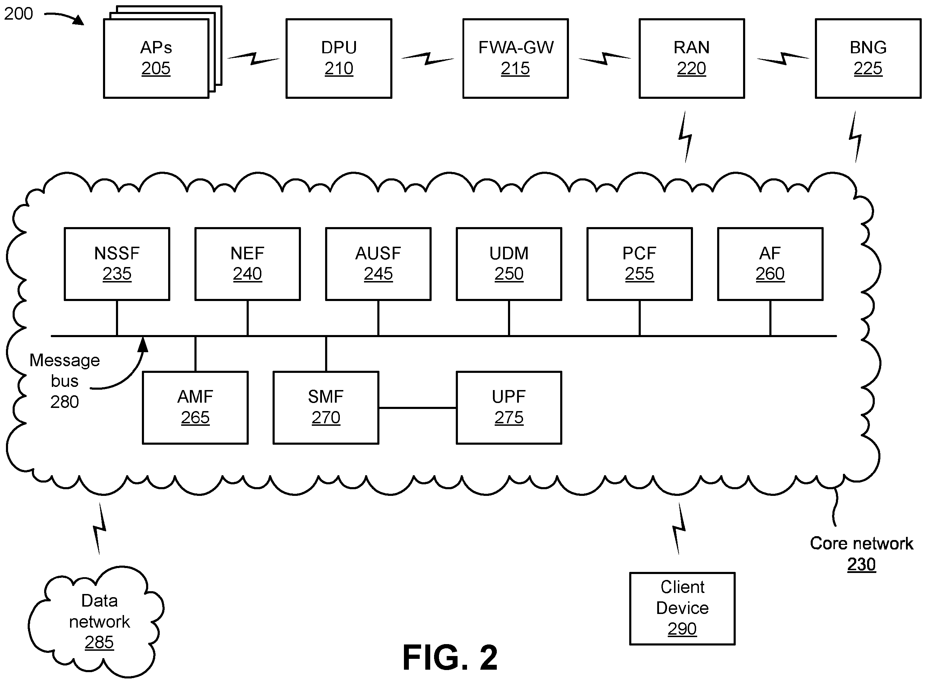

Figs. 1A-1E are diagrams of an example implementation 100 associated with a configuration of an FWA deployment. As shown in Figs. 1A-1E, example implementation 100 includes a plurality of APs (shown an AP 1 through AP *N,* where *N* > 1), a DPU, and one or more FWA-GWs, that are associated with an FWA deployment (e.g., to provide wireless broadband connectivity to user equipment connected to the plurality of APs). Further, Figs. 1A-1C show a single core network and associated devices (e.g., a RAN, a client device, and a broadband network gateway (BNG)) that are associated with the single FWA-GW, and the Figs. 1D-1E show a first core networks (core network *A*) and a second core network (core network *B*) that are associated with a first FWA-GW (FWA-GW *A*) and a second FWA-GW (FWA-GW *B*)*,* respectively. These devices and core networks are described in more detail below in connection with Figs. 2-4.

As shown in Figs. 1A-1E, the plurality of APs are associated with an MDU (shown, for illustration purposes, as a multi-story building). For example, each AP may be associated with a dwelling of the MDU. Each AP may have an address identifier (e.g., that uniquely identifies the AP). An address identifier may be, for example, a medium access control (MAC) address or another type of address identifier.

As further shown in Figs. 1A-1E, the DPU may include a plurality of ports (shown as port 1 through port *M*, where *M* ≥ *N),* and the plurality of APs may be connected to the plurality of ports of the DPU via respective connections (e.g., wired connections) between the plurality of ports of the DPU and the plurality of APs. For example, a connection 1 may connect the AP 1 and the port 1 of the DPU and a connection N may connect the AP *N* and the port *M* of the DPU.

As additionally shown in Figs. 1A-1C, the DPU may be connected to the FWA-GW (e.g., such that the DPU and the FWA-GW are located at, or withing a proximate radius, of the MDU). The DPU may be connected via a connection (e.g., a wired connection) between the DPU and the FWA-GW. As further shown in Figs. 1A-1C, the FWA-GW may be associated with a core network, and therefore may be associated with a RAN that communicates (e.g., wirelessly communicates) with the core network. Accordingly, the FWA-GW may communicate (e.g., wirelessly communicate) with the RAN to communicate with the core network. As further shown in Figs. 1A-1C, a client device and a BNG may be associated with the RAN and/or the core network to allow for the FWA-GW to communicate with the client device and the BNG, as further described herein.

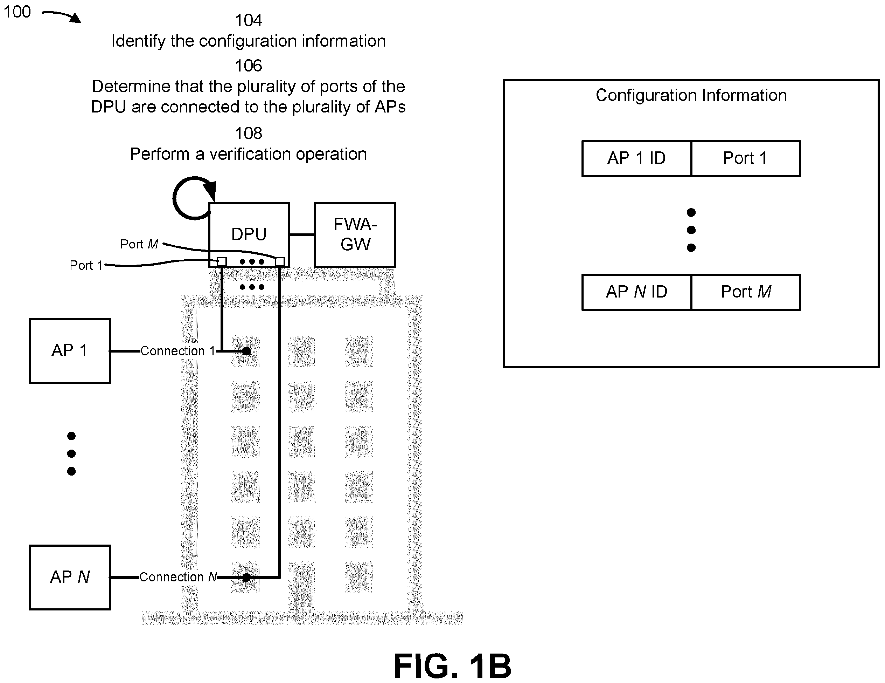

As shown in Fig. 1A, and by reference number 102, the DPU may obtain configuration information. For example, the DPU may obtain the configuration information from the client device (e.g., that is associated with the FWA deployment). The client device may send (e.g., wirelessly send) the configuration information to the FWA-GW via the RAN (and, optionally, to the RAN via the core network), and the FWA-GW may send the configuration information to the DPU (e.g., via the connection between the DPU and the FWA-GW). The DPU may thereby obtain the configuration information by receiving the configuration information (e.g., from the client device via the RAN and the FWA-GW). As another example, the DPU may obtain the configuration information via an input component of the DPU (e.g., by an administrator of the DPU interacting with the input component to enter the configuration information into the DPU). The configuration information is further described herein in relation to Fig. 1B.

As shown in Fig. 1B, and by reference number 104, the DPU may identify the configuration information (e.g., based on obtaining the configuration information). For example, the DPU may process (e.g., parse and/or read) the configuration information (e.g., after obtaining the configuration information) to allow the DPU to identify the configuration information.

In some implementations, the configuration information may indicate respective correspondences between the plurality of ports of the DPU and the address identifiers of the plurality of APs. As a specific example, as shown in Fig. 1B, the configuration information may indicate a correspondence between an address identifier of the AP 1 (shown as "AP 1 ID") and the port 1 of the DPU and a correspondence between an address identifier of the AP *N* (shown as "AP *N* ID") and the port *M* of the DPU. The configuration information may be represented in a data structure, such as a table, a database, or a key-value structure, among other examples.

As shown by reference number 106, the DPU may determine that the plurality of ports of the DPU are connected to the plurality of APs. For example, the DPU may use a link detection technique, and/or another type of technique, to determine that the plurality of ports of the DPU are connected to the plurality of APs (e.g., via the respective connections between the plurality of ports of the DPU and the plurality of APs).

As shown by reference number 108, the DPU, may perform a verification operation (e.g., based on determining that the plurality of ports of the DPU are connected to the plurality of APs). In some implementations, the DPU may perform the verification operation to determine that the plurality of APs are connected to the plurality of ports in accordance with the configuration information.

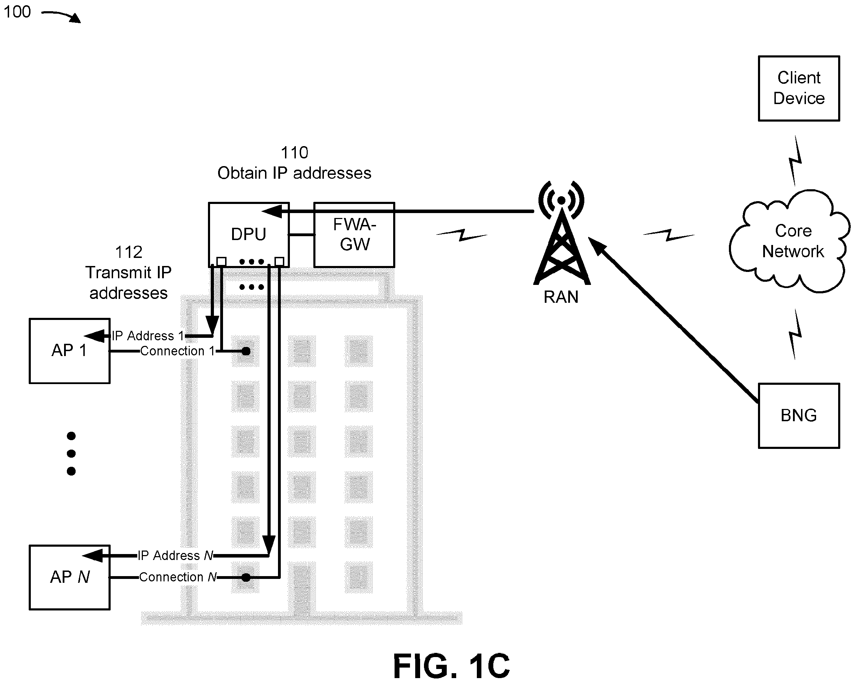

For example, as a result of determining that the plurality of ports of the DPU are connected to the plurality of APs, the DPU may determine, for each port of the DPU, an address identifier of an AP that is connected to the DPU via the port. The DPU then may determine whether the address identifier of the AP connected to the port matches (e.g., is the same as) the address identifier of the AP for the port that is indicated by the configuration information. For example, with respect to the configuration information shown in Fig. 1B, the DPU may determine whether the address identifier of the AP 1, which is connected to the port 1 of the DPU, matches the address identifier AP 1 ID that, for the port 1, is indicated by the configuration information. Accordingly, when the DPU determines that a match exists for each port of the DPU (e.g., determines that the physical configuration of the plurality of APs and the plurality of ports of the DPU match the configuration information), the DPU may determine that the plurality of APs are connected to the plurality of ports in accordance with the configuration information, and therefore the DPU may perform one or more operations described herein in relation to Fig. 1C. Alternatively, when the DPU determines that a match does not exist for at least one port of the DPU (e.g., that at least one physical configuration of the plurality of APs and the plurality of ports of the DPU does not match the configuration information), the DPU may determine that the plurality of APs are not connected to the plurality of ports in accordance with the configuration information, and therefore the DPU may refrain from performing any operations described herein in relation to Fig. 1C.

As shown in Fig. 1C, and by reference number 110, the DPU may obtain respective IP addresses associated with the plurality of APs (e.g., based on the configuration information). In some implementations, the DPU may communicate with the core network (and/or with one or more device associated with the core network), such as via the FWA-GW (and the RAN and the core network), to obtain the respective IP address associated with the plurality of APs. For example, the DPU may be configured as a DHCP relay agent, or a similar type of agent, that is to communicate with the core network, or with one or more devices associated with the core network, such as the BNG, to obtain the respective IP addresses.

In a specific example, to obtain a particular IP address for a particular AP that is connected to a particular port of the DPU (and therefore has an address identifier that corresponds to the particular port, as indicated by the configuration information), the DPU may transmit (e.g., to the core network and/or to the one or more devices associated with the core network) a first DHCP message (e.g., a DHCP discover message, a DHCP solicit message, or another type of DHCP message). The first DHCP message may include information that indicates the particular port of the DPU. The DPU (e.g., based on transmitting the first DHCP message, such as in response to the first DHCP message) then may receive (e.g., from the core network and/or from the one or more devices associated with the core network) a second DHCP message (e.g., a DHCP offer message, a DHCP advertise message, or another type of DHCP message). The second DHCP message may include a particular IP address (e.g., that is to be provided to the particular AP). In this way, the DPU may obtain an IP address for each AP.

As shown by reference number 112, the DPU may transmit the respective IP addresses to the plurality of APs. In some implementations, the DPU may transmit the respective IP addresses to the plurality of APs via the respective connections between the plurality of ports of the DPU and the plurality of APs. As a specific example, as shown in Fig. 1C, the DPU may transmit an IP address 1 (e.g., that was obtained for the AP 1) via the connection 1 between the AP 1 and the port 1 of the DPU, and the DPU may transmit an IP address *N* (e.g., that was obtained for the AP *N*) via the connection *N* between the AP *N* and the *port M* of the DPU.

In some implementations, instead of being connected to a single FWA-GW, the DPU may be connected to a plurality of FWA-GWs. For example, as shown in Figs. 1D-1E, the DPU may be connected to at least a first FWA-GW (FWA-GW *A*) that is associated with a first core network (core network *A*) and a second FWA-GW (FWA-GW *B*) that is associated with a second core network (core network *B*) (e.g., that is different than the first core network). Accordingly, the DPU may identify that the DPU is connected to at least the first FWA-GW and the second FWA-GW (e.g., in a similar manner as that described herein in relation to Fig. 1B and reference number 106)

Accordingly, as shown in Fig. 1D and by reference number 114, the DPU may identify the configuration information (e.g., in a similar manner as that described herein in relation to Fig. 1B and reference number 104). The configuration information may indicate respective correspondences between the plurality of ports of the DPU and the address identifiers of the plurality of APs (e.g., as described elsewhere herein), and may further indicate that address identifiers of a first set of one or more APs, of the plurality of APs, are associated with the first core network, that address identifiers of a second set of one or more APs, of the plurality of APs, are associated with the second core network, and/or so on. As a specific example, as shown in Fig. 1D, the configuration information may indicate a correspondence between an address identifier of AP 1 (shown as "AP 1 ID") and the port 1 of the DPU, a correspondence between an address identifier of AP *N* (shown as "AP *N* ID") and the port *M* of the DPU, and may further indicate that the address identifier of AP 1 is associated with the first core network ("Core Network A") and that the address identifier of AP *N* is associated with the second core network ("Core Network B").

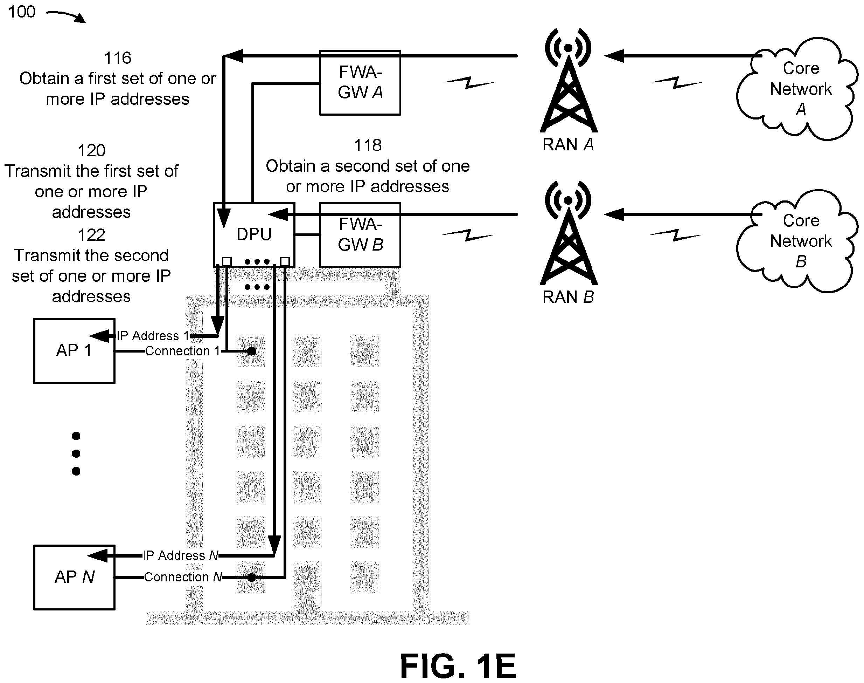

In some implementations, the DPU may determine that the plurality of ports of the DPU are connected to the plurality of APs and may perform a verification operation (e.g., in a similar manner as that described herein in relation to Fig. 1B and reference numbers 106 and 108). Accordingly, the DPU may determine that the plurality of APs are connected to the plurality of ports in accordance with the configuration information, and therefore the DPU may perform one or more operations described herein in relation to Fig. 1E. Alternatively, the DPU may determine that the plurality of APs are not connected to the plurality of ports in accordance with the configuration information, and therefore the DPU may refrain from performing any operations described herein in relation to Fig. 1E.

As shown in Fig. 1E, the DPU may obtain respective IP addresses associated with the plurality of APs (e.g., based on the configuration information), such as in similar manner as that described herein in relation to Fig. 1C. For example, as shown by reference numbers 116 and 118, the DPU may communicate with the first core network (and/or with one or more device associated with the first core network), such as via the first FWA-GW (and a first RAN, "RAN A," and the first core network), to obtain a first set of one or more IP addresses (of the respective IP address) that are, for example, for the first set of one or more APs; may communicate with the second core network (and/or with one or more device associated with the second core network), such as via the second FWA-GW (and a second RAN, "RAN B," and the second core network), to obtain a second set of one or more IP addresses (of the respective IP address) that are, for example, for the second set of one or more APs; and/or so on.

As further shown in Fig. 1E, the DPU may may transmit the respective IP addresses to the plurality of APs (e.g., based on the configuration information), such as in similar manner as that described herein in relation to Fig. 1C. For example, as shown by reference numbers 120 and 122, the DPU may transmit (e.g., based on the configuration information) the first set of one or more IP addresses to the first set of one or more APs, may transmit (e.g., based on the configuration information) the second set of one or more IP addresses to the second set of one or more APs, and/or so on. In a specific example, the DPU may transmit an IP address 1 (e.g., that was obtained for the AP 1 and that is associated with the first core network) via the connection 1 between the AP 1 and the port 1 of the DPU, and the DPU may transmit an IP address *N* (e.g., that was obtained for the AP *N* and that is associated with the second core network) via the connection *N* between the AP *N* and the por*t M* of the DPU.

As indicated above, Figs. 1A-1E are provided as an example. Other examples may differ from what is described with regard to Figs. 1A-1E. The number and arrangement of devices shown in Figs. 1A-1E are provided as an example. In practice, there may be additional devices, fewer devices, different devices, or differently arranged devices than those shown in Figs. 1A-1E. Furthermore, two or more devices shown in Figs. 1A-1E may be implemented within a single device, or a single device shown in Figs. 1A-1E may be implemented as multiple, distributed devices. Additionally, or alternatively, a set of devices (e.g., one or more devices) shown in Figs. 1A-1E may perform one or more functions described as being performed by another set of devices shown in Figs. 1A-1E.

Fig. 2 is a diagram of an example environment 200 in which systems and/or methods described herein may be implemented. As shown in Fig. 2, example environment 200 may include a plurality of APs 205, a DPU 210, an FWA-GW 215, a RAN 220, a BNG 225, a core network 230, a data network 285, and a client device 290. Devices and/or networks of example environment 200 may interconnect via wired connections, wireless connections, or a combination of wired and wireless connections.

Each AP 205 includes one or more devices capable of receiving, generating, storing, processing, and/or providing information, such as information described herein. For example, the AP 205 may include a network device (e.g., a router, a switch, or another type of network device) that provides wireless and/or wired signaling for user equipment. The AP 205 may connect to a port of the DPU 210 via a connection (e.g., a wired connection), which allows the AP 205 to obtain an IP address and to communicate with the core network 230.

The DPU 210 includes one or more devices capable of receiving, generating, storing, processing, and/or providing information, such as information described herein. For example, the DPU 210 may include a network device (e.g., a router, a switch, or another type of network device) that serves as aggregation point for traffic from multiple different APs 205. The DPU 210 may include an infrastructure processing unit (IPU), a smart network interface card (NIC), a system-on-chip (SoC)-based NIC that can perform processing and analysis of a network, security, storage for datasets, and/or the like. The DPU 210 may include a programmable computer processor that tightly integrates a general-purpose central processing unit (CPU) with network interface hardware. The DPU 210 may be used to perform encryption/decryption, to serve as a firewall, to handle protocols, to process network requests, to function as a hypervisor or storage controller, and/or the like.

The FWA-GW 215 includes one or more devices capable of receiving, generating, storing, processing, and/or providing information, such as information described herein. For example, FWA-GW 215 may include a network device (e.g., a router, a switch, or another type of network device), a mobile hotspot device, an FWA device, an FWA channel service unit, an FWA data service unit, an FWA router, an FWA wireless access point (WAP) device, an FWA modem, an FWA set-top box, or a similar type of device. The FWA-GW 215 may provide wireless connectivity, such as through radio links, between two fixed points (e.g., the DPU 210 and the RAN 220), such as to enable communication with the core network 230.

The RAN 220 may support, for example, a cellular radio access technology (RAT). The RAN 220 may include one or more base stations (e.g., base transceiver stations, radio base stations, node Bs, eNodeBs (eNBs), gNodeBs (gNBs), base station subsystems, cellular sites, cellular towers, access points, transmit receive points (TRPs), radio access nodes, macrocell base stations, microcell base stations, picocell base stations, femtocell base stations, or similar types of devices) and other network entities that can support wireless communication. The RAN 220 may transfer traffic between user equipment (e.g., using a cellular RAT), one or more other RANs 220 (e.g., using a wireless interface or a backhaul interface, such as a wired backhaul interface), and/or the core network 230. The RAN 220 may provide one or more cells that cover geographic areas.

In some implementations, the RAN 220 may perform scheduling and/or resource management for the FWA-GW 215 covered by the RAN 220 (e.g., for the FWA-GW 215 covered by a cell provided by the RAN 220). In some implementations, the RAN 220 may be controlled or coordinated by a network controller, which may perform load balancing, network-level configuration, and/or the like. The network controller may communicate with the RAN 220 via a wireless or wireline backhaul. In some implementations, the RAN 220 may include a network controller, a self-organizing network (SON) module or component, or a similar module or component. In other words, the RAN 220 may perform network control, scheduling, and/or network management functions (e.g., for uplink, downlink, and/or sidelink communications of the FWA-GW 215 covered by the RAN 220).

The BNG 225 includes one or more devices capable of receiving, generating, storing, processing, and/or providing information, such as information described herein. For example, the BNG 225 may be configured as a DHCP server and may provide DHCP services for the plurality of APs 205, the DPU 210, and/or the FWA-GW 215 (e.g., in association with core network 230). In some implementations, the BNG 225 provides user equipment with access to a broadband network and connects subscribers to a service provider network. The BNG 225 may aggregate traffic from a plurality of user equipment and may route the traffic to the service provider network.

In some implementations, core network 230 may include an example functional architecture in which systems and/or methods described herein may be implemented. For example, core network 230 may include an example architecture of a fifth generation (5G) next generation (NG) core network included in a 5G wireless telecommunications system. While the example architecture of core network 230 shown in Fig. 2 may be an example of a service-based architecture, in some implementations, core network 230 may be implemented as a reference-point architecture, a 4G core network, and/or the like.

As shown in Fig. 2, core network 230 may include a number of functional elements. The functional elements may include, for example, a network slice selection function (NSSF) 235, a network exposure function (NEF) 240, an authentication server function (AUSF) 245, a unified data management component (UDM) 250, a policy control function (PCF) 255, an application function (AF) 260, an access and mobility management function (AMF) 265, a session management function (SMF) 270, a user plane function (UPF) 275, and/or the like. These functional elements may be communicatively connected via a message bus 280. Each of the functional elements shown in Fig. 2 is implemented on one or more devices associated with a wireless telecommunications system. In some implementations, one or more of the functional elements may be implemented on physical devices, such as an access point, a base station, a gateway, and/or the like. In some implementations, one or more of the functional elements may be implemented on a computing device of a cloud computing environment.

The NSSF 235 includes one or more devices that select network slice instances for the plurality of APs 205. By providing network slicing, the NSSF 235 allows an operator to deploy multiple substantially independent end-to-end networks potentially with the same infrastructure. In some implementations, each slice may be customized for different services.

The NEF 240 includes one or more devices that support exposure of capabilities and/or events in the wireless telecommunications system to help other entities in the wireless telecommunications system discover network services.

The AUSF 245 includes one or more devices that act as an authentication server and support the process of authenticating the plurality of APs 205 in the wireless telecommunications system.

The UDM 250 includes one or more devices that store user data and profiles in the wireless telecommunications system. The UDM 250 may be used for fixed access, mobile access, and/or the like, in the core network 230.

The PCF 255 includes one or more devices that provide a policy framework that incorporates network slicing, roaming, packet processing, mobility management, and/or the like.

The AF 260 includes one or more devices that support application influence on traffic routing, access to the NEF 240, policy control, and/or the like.

The AMF 265 includes one or more devices that act as a termination point for non-access stratum (NAS) signaling, mobility management, and/or the like.

The SMF 270 includes one or more devices that support the establishment, modification, and release of communication sessions in the wireless telecommunications system. For example, the SMF 270 may configure traffic steering policies at the UPF 275, enforce user equipment IP address allocation and policies, and/or the like.

The UPF 275 includes one or more devices that serve as an anchor point for intraRAT and/or interRAT mobility. The UPF 275 may apply rules to packets, such as rules pertaining to packet routing, traffic reporting, handling user plane quality of service (QoS), and/or the like.

The message bus 280 represents a communication structure for communication among the functional elements. In other words, the message bus 280 may permit communication between two or more functional elements.

The data network 285 includes one or more wired and/or wireless data networks. For example, the data network 285 may include an IP Multimedia Subsystem (IMS), a public land mobile network (PLMN), a local area network (LAN), a wide area network (WAN), a metropolitan area network (MAN), a private network such as a corporate intranet, an ad hoc network, the Internet, a fiber optic-based network, a cloud computing network, a third party services network, an operator services network, and/or the like, and/or a combination of these or other types of networks.

The client device 290 may include one or more devices capable of receiving, generating, storing, processing, and/or providing information, such as configuration information, as described elsewhere herein. The client device 290 may include a communication device and/or a computing device. For example, the client device 290 may include a wireless communication device, a mobile phone, a user equipment, a laptop computer, a tablet computer, a desktop computer, a wearable communication device (e.g., a smart wristwatch, a pair of smart eyeglasses, a head mounted display, or a virtual reality headset), or a similar type of device.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of example environment 200 may perform one or more functions described as being performed by another set of devices of example environment 200.

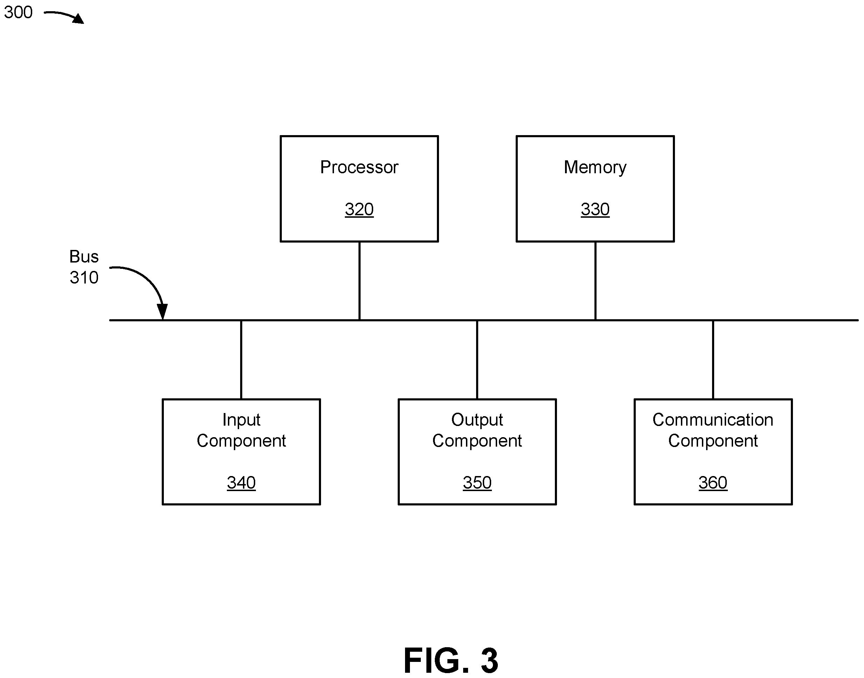

Fig. 3 is a diagram of example components of a device 300 associated with a configuration of an FWA deployment. The device 300 may correspond to the plurality of APs 205, the DPU 210, the FWA-GW 215, the RAN 220, the BNG 225, the NSSF 235, the NEF 240, the AUSF 245, the UDM 250, the PCF 255, the AF 260, the AMF 265, the SMF 270, the UPF 275, and/or the client device 290. In some implementations, the plurality of APs 205, the DPU 210, the FWA-GW 215, the RAN 220, the BNG 225, the NSSF 235, the NEF 240, the AUSF 245, the UDM 250, the PCF 255, the AF 260, the AMF 265, the SMF 270, the UPF 275, and/or the client device 290 may include one or more devices 300 and/or one or more components of the device 300. As shown in Fig. 3, the device 300 may include a bus 310, a processor 320, a memory 330, an input component 340, an output component 350, and/or a communication component 360.

The bus 310 may include one or more components that enable wired and/or wireless communication among the components of the device 300. The bus 310 may couple together two or more components of Fig. 3, such as via operative coupling, communicative coupling, electronic coupling, and/or electric coupling. For example, the bus 310 may include an electrical connection (e.g., a wire, a trace, and/or a lead) and/or a wireless bus. The processor 320 may include a central processing unit, a graphics processing unit, a microprocessor, a controller, a microcontroller, a digital signal processor, a field-programmable gate array, an application-specific integrated circuit, and/or another type of processing component. The processor 320 may be implemented in hardware, firmware, or a combination of hardware and software. In some implementations, the processor 320 may include one or more processors capable of being programmed to perform one or more operations or processes described elsewhere herein.

The memory 330 may include volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 may store information, one or more instructions, and/or software (e.g., one or more software applications) related to the operation of the device 300. In some implementations, the memory 330 may include one or more memories that are coupled (e.g., communicatively coupled) to one or more processors (e.g., processor 320), such as via the bus 310. Communicative coupling between a processor 320 and a memory 330 may enable the processor 320 to read and/or process information stored in the memory 330 and/or to store information in the memory 330.

The input component 340 may enable the device 300 to receive input, such as user input and/or sensed input. For example, the input component 340 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 350 may enable the device 300 to provide output, such as via a display, a speaker, and/or a light-emitting diode. The communication component 360 may enable the device 300 to communicate with other devices via a wired connection and/or a wireless connection. For example, the communication component 360 may include a receiver, a transmitter, a transceiver, a modem, a network interface card, and/or an antenna.

The device 300 may perform one or more operations or processes described herein. For example, a computer-readable medium (e.g., memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

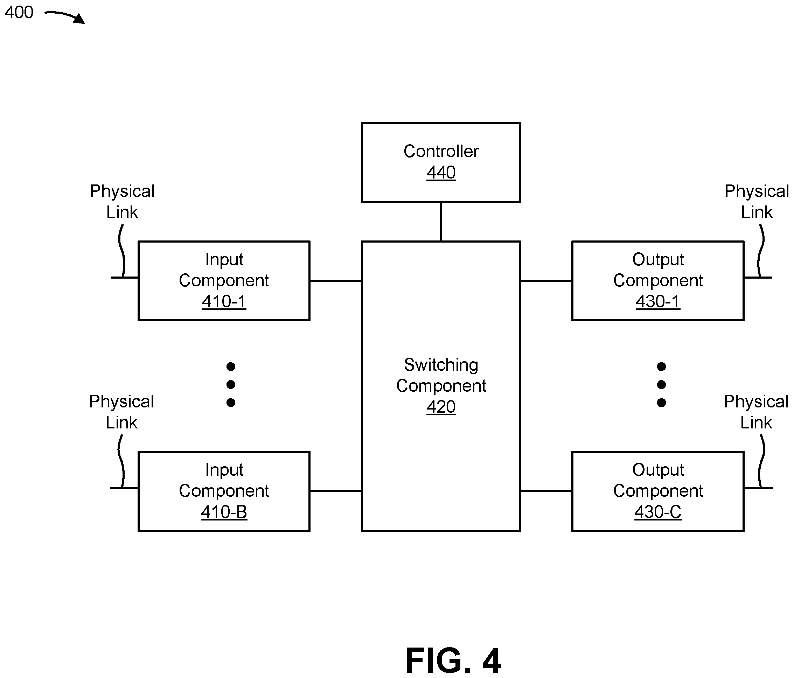

Fig. 4 is a diagram of example components of a device 400 associated with a configuration of an FWA deployment. Device 400 may correspond to the plurality of APs 205, the DPU 210, the FWA-GW 215, the RAN 220, the BNG 225, the NSSF 235, the NEF 240, the AUSF 245, the UDM 250, the PCF 255, the AF 260, the AMF 265, the SMF 270, the UPF 275, and/or the client device 290. In some implementations, the plurality of APs 205, the DPU 210, the FWA-GW 215, the RAN 220, the BNG 225, the NSSF 235, the NEF 240, the AUSF 245, the UDM 250, the PCF 255, the AF 260, the AMF 265, the SMF 270, the UPF 275, and/or the client device 290 may include one or more devices 400 and/or one or more components of device 400. As shown in Fig. 4, device 400 may include one or more input components 410-1 through 410-B (B ≥ 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

Input component 410 may be one or more points of attachment for physical links and may be one or more points of entry for incoming traffic, such as packets. Input component 410 may process incoming traffic, such as by performing data link layer encapsulation or decapsulation. In some implementations, input component 410 may transmit and/or receive packets. In some implementations, input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, device 400 may include one or more input components 410.

Switching component 420 may interconnect input components 410 with output components 430. In some implementations, switching component 420 may be implemented via one or more crossbars, via busses, and/or with shared memories. The shared memories may act as temporary buffers to store packets from input components 410 before the packets are eventually scheduled for delivery to output components 430. In some implementations, switching component 420 may enable input components 410, output components 430, and/or controller 440 to communicate with one another.

Output component 430 may store packets and may schedule packets for transmission on output physical links. Output component 430 may support data link layer encapsulation or decapsulation, and/or a variety of higher-level protocols. In some implementations, output component 430 may transmit packets and/or receive packets. In some implementations, output component 430 may include an output line card that includes one or more packet processing components (e.g., in the form of integrated circuits), such as one or more IFCs, packet forwarding components, line card controller components, output ports, processors, memories, and/or output queues. In some implementations, device 400 may include one or more output components 430. In some implementations, input component 410 and output component 430 may be implemented by the same set of components (e.g., and input/output component may be a combination of input component 410 and output component 430).

Controller 440 includes a processor in the form of, for example, a central processing unit (CPU), a graphics processing unit (GPU), a microprocessor, a controller, a microcontroller, a digital signal processor (DSP), a field-programmable gate array (FPGA), an application-specific integrated circuit (ASIC), and/or another type of processing component. The processor is implemented in hardware, firmware, or a combination of hardware and software. In some implementations, controller 440 may include one or more processors that can be programmed to perform a function.

In some implementations, controller 440 may include a RAM, a ROM, and/or another type of dynamic or static storage device (e.g., a flash memory, a magnetic memory, an optical memory, etc.) that stores information and/or instructions for use by controller 440.

In some implementations, controller 440 may communicate with other devices, networks, and/or systems connected to device 400 to exchange information regarding network topology. Controller 440 may create routing tables based on the network topology information, may create forwarding tables based on the routing tables, and may forward the forwarding tables to input components 410 and/or output components 430. Input components 410 and/or output components 430 may use the forwarding tables to perform route lookups for incoming and/or outgoing packets.

Controller 440 may perform one or more processes described herein. Controller 440 may perform these processes in response to executing software instructions stored by and/or provided from a computer-readable medium. A computer-readable medium may be provided by way of a computer-readable storage medium, such as a memory device (which may be considered as a non-transitory memory device). A memory device includes memory space within a single physical storage device or memory space spread across multiple physical storage devices. Examples of a computer-readable storage medium may include a CD, a DVD, a storage device, a diskette, a tape, flash memory, physical memory, or any other computer-readable storage medium. A computer-readable medium may also or alternatively be provided by way of a transmission medium by which instructions may be conveyed. A computer-readable transmission medium may include carrier waves, transmission signals or the like. A computer-readable transmission medium may convey instructions between components of a single computer system and/or between plural separate computer systems.

Software instructions may be read into a memory and/or storage component associated with controller 440 from another computer-readable medium or from another device via a communication interface. When executed, software instructions stored in a memory and/or storage component associated with controller 440 may cause controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, device 400 may include additional components, fewer components, different components, or differently arranged components than those shown in Fig. 4. Additionally, or alternatively, a set of components (e.g., one or more components) of device 400 may perform one or more functions described as being performed by another set of components of device 400.

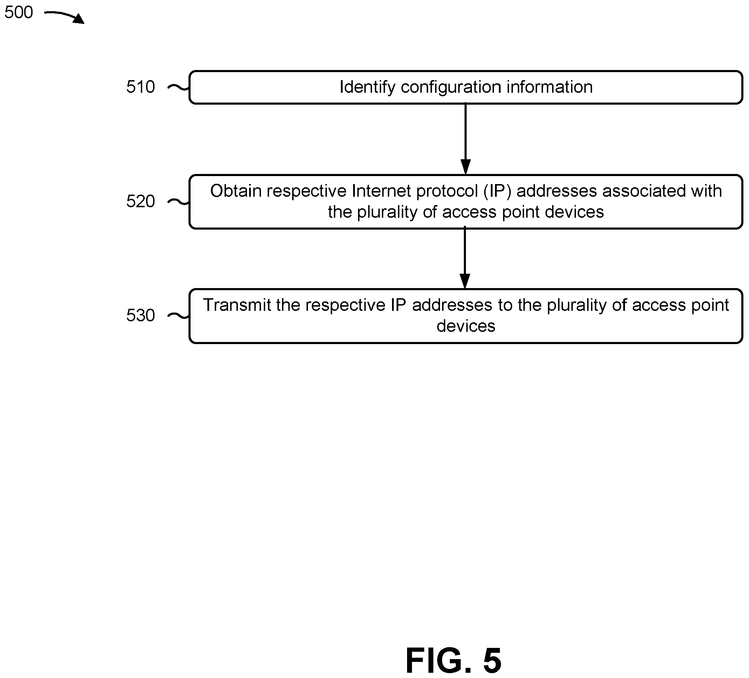

Fig. 5 is a flowchart of an example process 500 associated with a configuration of an FWA deployment. In some implementations, one or more process blocks of Fig. 5 are performed by a DPU (e.g., the DPU 210), which is associated with an FWA deployment. In some implementations, one or more process blocks of Fig. 5 are performed by another device or a group of devices separate from or including the DPU, such an AP (e.g., the 205), an FWA-GW (e.g., the FWA-GW 215), a RAN (e.g., the RAN 220), a BNG (e.g., the BNG 225), one or more functions of a core network (e.g., the core network 230), and/or a client device (e.g., the client device 290). Additionally, or alternatively, one or more process blocks of Fig. 5 may be performed by one or more components of device 300, such as processor 320, memory 330, input component 340, output component 350, and/or communication component 360; device 400, such as input component 410, switching component 420, output component 430, and/or controller 440; and/or another device.

As shown in Fig. 5, process 500 may include identifying configuration information (block 510). For example, the DPU may identify configuration information, as described above. The configuration information may indicate respective correspondences between a plurality of ports of the DPU and address identifiers of a plurality of access point devices.

As further shown in Fig. 5, process 500 may include obtaining respective IP addresses associated with the plurality of access point devices (block 520). For example, the DPU may obtain, based on the configuration information, respective IP addresses associated with the plurality of access point devices, as described above.

As further shown in Fig. 5, process 500 may include transmitting the respective IP addresses to the plurality of access point devices (block 530). For example, the DPU may transmit, via respective connections between the plurality of ports of the DPU and the plurality of access point devices, the respective IP addresses to the plurality of access point devices, as described above.

Process 500 may include additional implementations, such as any single implementation or any combination of implementations described below and/or in connection with one or more other processes described elsewhere herein.

In a first implementation, process 500 includes obtaining, from a client device associated with the FWA deployment, the configuration information.

In a second implementation, alone or in combination with the first implementation, process 500 includes determining that the plurality of ports of the DPU are connected to the plurality of access point devices, and performing, prior to obtaining the respective IP addresses, a verification operation to determine that the plurality of access point devices are connected to the plurality of ports in accordance with the configuration information.

In a third implementation, alone or in combination with one or more of the first and second implementations, each access point device, of the plurality of access point devices, is associated with a dwelling of a multi-dwelling unit.

In a fourth implementation, alone or in combination with one or more of the first through third implementations, process 500 includes transmitting, to one or more devices associated with a core network, a first DHCP message that includes information that indicates a particular port of the plurality of ports of the DPU, and receiving, based on transmitting the first DHCP message, from the one or more devices associated with the core network, a second DHCP message that includes a particular IP address of the respective IP addresses, wherein the particular IP address is to be provided to a particular access point device, of the plurality of access point devices, that has an address identifier that corresponds to the particular port of the DPU, as indicated by the configuration information.

In a fifth implementation, alone or in combination with one or more of the first through fourth implementations, the DPU is connected to at least a first FWA gateway associated with a first core network and a second FWA gateway associated with a second core network.

In a sixth implementation, alone or in combination with one or more of the first through fifth implementations, process 500 includes communicating, with one or more devices associated with the first core network, via the first FWA gateway, to obtain a first set of one or more IP addresses of the respective IP addresses, and communicating, with one or more second devices associated with the second core network, via the second FWA gateway, to obtain a second set of one or more IP addresses of the respective IP addresses.

In a seventh implementation, alone or in combination with one or more of the first through sixth implementations, the configuration information further indicates that address identifiers of a first set of one or more access point devices, of the plurality of access point devices, are associated with the first core network and that address identifiers of a second set of one or more access point devices, of the plurality of access point devices, are associated with the second core network, wherein the one or more processors, to transmit the respective IP addresses, are to transmitting, based on the configuration information, the first set of one or more IP addresses to the first set of one or more access point devices, and transmitting, based on the configuration information, the second set of one or more IP addresses to the second set of one or more access point devices.

Although Fig. 5 shows example blocks of process 500, in some implementations, process 500 includes additional blocks, fewer blocks, different blocks, or differently arranged blocks than those depicted in Fig. 5. Additionally, or alternatively, two or more of the blocks of process 500 may be performed in parallel.

Therefore, from one perspective, there have been described approaches for a distribution point unit (DPU) that is associated with an fixed wireless access (FWA) deployment. The DPU identifies configuration information that indicates respective correspondences between a plurality of ports of the DPU and address identifiers of a plurality of access point devices. The DPU determines that the plurality of ports of the DPU are connected to the plurality of access point devices and performs a verification operation to determine that the plurality of access point devices are connected to the plurality of ports in accordance with the configuration information. The DPU obtains, based on the configuration information, respective Internet protocol (IP) addresses associated with the plurality of access point devices. The DPU transmits, via respective connections between the plurality of ports of the DPU and the plurality of access point devices, the respective IP addresses to the plurality of access point devices.

Further examples of feature combinations taught by the present disclosure are set out in the following numbered clauses.

Clause 1. A distribution point unit (DPU) associated with a fixed wireless access (FWA) deployment, comprising: one or more memories; and one or more processors to: identify configuration information that indicates respective correspondences between a plurality of ports of the DPU and address identifiers of a plurality of access point devices; obtain, based on the configuration information, respective Internet protocol (IP) addresses associated with the plurality of access point devices; and transmit, via respective connections between the plurality of ports of the DPU and the plurality of access point devices, the respective IP addresses to the plurality of access point devices.

Clause 2. The DPU of clause 1, wherein the one or more processors are further to: obtain, from a client device associated with the FWA deployment, the configuration information.

Clause 3. The DPU of clause 1 or 2, wherein the one or more processors are further to: determine that the plurality of ports of the DPU are connected to the plurality of access point devices; and perform, prior to obtaining the respective IP addresses, a verification operation to determine that the plurality of access point devices are connected to the plurality of ports in accordance with the configuration information.

Clause 4. The DPU of clause 1, 2 or 3, wherein each access point device, of the plurality of access point devices, is associated with a dwelling of a multi-dwelling unit.

Clause 5. The DPU of any preceding clause, wherein the one or more processors, to obtain the respective IP addresses, are to: transmit, to one or more devices associated with a core network, a first dynamic host configuration protocol (DHCP) message that includes information that indicates a particular port of the plurality of ports of the DPU; and receive, based on transmitting the first DHCP message, from the one or more devices associated with the core network, a second DHCP message that includes a particular IP address of the respective IP addresses, wherein the particular IP address is to be provided to a particular access point device, of the plurality of access point devices, that has an address identifier that corresponds to the particular port of the DPU, as indicated by the configuration information.

Clause 6. The DPU of any preceding clause, wherein the DPU is connected to at least a first FWA gateway associated with a first core network and a second FWA gateway associated with a second core network.

Clause 7. The DPU of clause 6, wherein the one or more processors, to obtain the respective IP addresses, are to: communicate, with one or more devices associated with the first core network, via the first FWA gateway, to obtain a first set of one or more IP addresses of the respective IP addresses; and communicate, with one or more second devices associated with the second core network, via the second FWA gateway, to obtain a second set of one or more IP addresses of the respective IP addresses.

Clause 8. The DPU of clause 6 or 7, wherein the configuration information further indicates that address identifiers of a first set of one or more access point devices, of the plurality of access point devices, are associated with the first core network and that address identifiers of a second set of one or more access point devices, of the plurality of access point devices, are associated with the second core network, wherein the one or more processors, to transmit the respective IP addresses, are to: transmit, based on the configuration information, the first set of one or more IP addresses to the first set of one or more access point devices; and transmit, based on the configuration information, the second set of one or more IP addresses to the second set of one or more access point devices.

Clause 9. A computer-readable medium comprising a set of instructions, the set of instructions comprising: one or more instructions that, when executed by one or more processors of a distribution point unit (DPU) associated with a fixed wireless access (FWA) deployment, cause the DPU to: identify configuration information that indicates respective correspondences between a plurality of ports of the DPU and address identifiers of a plurality of access point devices; determine that the plurality of ports of the DPU are connected to the plurality of access point devices; and perform a verification operation to determine that the plurality of access point devices are connected to the plurality of ports in accordance with the configuration information.

Clause 10. The computer-readable medium of clause 9, wherein the one or more instructions, when executed by the one or more processors, further cause the DPU to: obtain, from a client device associated with the FWA deployment, the configuration information.

Clause 11. The computer-readable medium of clause 9 or 10, wherein the one or more instructions, when executed by the one or more processors, further cause the DPU to: obtain, based on the configuration information, respective Internet protocol (IP) addresses associated with the plurality of access point devices; and transmit, via respective connections between the plurality of ports of the DPU and the plurality of access point devices, the respective IP addresses to the plurality of access point devices.

Clause 12. The computer-readable medium of clause 11, wherein the one or more instructions, that cause the DPU to obtain the respective IP addresses, cause the DPU to: transmit, to a core network, a first dynamic host configuration protocol (DHCP) message that includes information that indicates a particular port of the plurality of ports of the DPU; and receive, based on transmitting the first DHCP message, from the core network, a second DHCP message that includes a particular IP address, of the respective IP addresses, that is to be provided to a particular access point device, of the plurality of access point devices, that has an address identifier that corresponds to the particular port of the DPU.

Clause 13. The computer-readable medium of any of clauses 9 to 12, wherein the one or more instructions, when executed by the one or more processors, further cause the DPU to: identify that the DPU is connected to at least a first FWA gateway associated with a first core network and a second FWA gateway associated with a second core network.

Clause 14. The computer-readable medium of clause 13, wherein the configuration information further indicates that address identifiers of a first set of one or more access point devices, of the plurality of access point devices, are associated with the first core network and that address identifiers of a second set of one or more access point devices, of the plurality of access point devices, are associated with the second core network, wherein the one or more instructions, when executed by the one or more processors, further cause the DPU to: communicate, with the first core network, via the first FWA gateway, and based on the configuration information, to obtain a first set of one or more IP addresses for the first set of one or more access point devices; and communicate, with the second core network, via the second FWA gateway, and based on the configuration information, to obtain a second set of one or more IP addresses for the second set of one or more access point devices.

Clause 15. The computer-readable medium of clause 14, wherein the one or more instructions, when executed by the one or more processors, further cause the DPU to: transmit the first set of one or more IP addresses to the first set of one or more access point devices; and transmit the second set of one or more IP addresses to the second set of one or more access point devices.

Clause 16. A method, comprising: obtaining, by a distribution point unit (DPU) associated with a fixed wireless access (FWA) deployment, respective Internet protocol (IP) addresses associated with a plurality of access point devices connected to a plurality of ports of the DPU; and transmitting, by the DPU, via respective connections between the plurality of ports of the DPU and the plurality of access point devices, the respective IP addresses to the plurality of access point devices.

Clause 17. The method of clause 16, further comprising: performing, prior to obtaining the respective IP addresses, a verification operation to determine that the plurality of access point devices are connected to the plurality of ports in accordance with configuration information that indicates respective correspondences between the plurality of ports of the DPU and address identifiers of the plurality of access point devices.

Clause 18. The method of clause 16 or 17, wherein obtaining the respective IP addresses comprises: transmitting a first dynamic host configuration protocol (DHCP) message that includes information that indicates a particular port of the plurality of ports of the DPU; and receiving, based on transmitting the first DHCP message, a second DHCP message that includes a particular IP address, of the respective IP addresses, that is to be provided to a particular access point device, of the plurality of access point devices, that has an address identifier that corresponds to the particular port of the DPU.

Clause 19. The method of clause 16, 17 or 18, wherein obtaining the respective IP addresses comprises: communicating, via a first FWA gateway associated with a first core network, to obtain a first set of one or more IP addresses of the respective IP addresses; and communicating, via a second FWA gateway associated with a second core network, to obtain a second set of one or more IP addresses of the respective IP addresses.

Clause 20. The method of clause 19, wherein transmitting the respective IP addresses comprises: transmitting the first set of one or more IP addresses to a first set of one or more access point devices, of the plurality of access point devices, that are associated with the first core network; and transmitting the second set of one or more IP addresses to a second set of one or more access point devices, of the plurality of access point devices, that are associated with the second core network.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, traffic or content may include a set of packets. A packet may refer to a communication structure for communicating information, such as a protocol data unit (PDU), a service data unit (SDU), a network packet, a datagram, a segment, a message, a block, a frame (e.g., an Ethernet frame), a portion of any of the above, and/or another type of formatted or unformatted unit of data capable of being transmitted via a network.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors to: perform X; perform Y; and perform Z," that claim should be interpreted to mean "one or more processors to perform X; one or more (possibly different) processors to perform Y; and one or more (also possibly different) processors to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A distribution point unit (DPU) associated with a fixed wireless access (FWA) deployment, the DPU configured to:
identify configuration information that indicates respective correspondences between a plurality of ports of the DPU and address identifiers of a plurality of access point devices;
obtain, based on the configuration information, respective Internet protocol (IP) addresses associated with the plurality of access point devices; and
transmit, via respective connections between the plurality of ports of the DPU and the plurality of access point devices, the respective IP addresses to the plurality of access point devices.

2. The DPU of claim 1, further configured to:
obtain, from a client device associated with the FWA deployment, the configuration information.

3. The DPU of claim 1 or 2, further configured to:
determine that the plurality of ports of the DPU are connected to the plurality of access point devices; and
perform, prior to obtaining the respective IP addresses, a verification operation to determine that the plurality of access point devices are connected to the plurality of ports in accordance with the configuration information.

4. The DPU of claim 1, 2 or 3, wherein each access point device, of the plurality of access point devices, is associated with a dwelling of a multi-dwelling unit.

5. The DPU of any preceding claim, wherein to obtain the respective IP addresses the DPU is further configured to:
transmit, to one or more devices associated with a core network, a first dynamic host configuration protocol (DHCP) message that includes information that indicates a particular port of the plurality of ports of the DPU; and
receive, based on transmitting the first DHCP message, from the one or more devices associated with the core network, a second DHCP message that includes a particular IP address of the respective IP addresses,
wherein the particular IP address is to be provided to a particular access point device, of the plurality of access point devices, that has an address identifier that corresponds to the particular port of the DPU, as indicated by the configuration information.

6. The DPU of any preceding claim, wherein the DPU is connected to at least a first FWA gateway associated with a first core network and a second FWA gateway associated with a second core network, for example wherein to obtain the respective IP addresses the DPU is further configured to: communicate, with one or more devices associated with the first core network, via the first FWA gateway, to obtain a first set of one or more IP addresses of the respective IP addresses; and communicate, with one or more second devices associated with the second core network, via the second FWA gateway, to obtain a second set of one or more IP addresses of the respective IP addresses.

7. The DPU of claim 6, wherein the configuration information further indicates that address identifiers of a first set of one or more access point devices, of the plurality of access point devices, are associated with the first core network and that address identifiers of a second set of one or more access point devices, of the plurality of access point devices, are associated with the second core network,
wherein the one or more processors, to transmit the respective IP addresses, are to:
transmit, based on the configuration information, the first set of one or more IP addresses to the first set of one or more access point devices; and
transmit, based on the configuration information, the second set of one or more IP addresses to the second set of one or more access point devices.

8. A computer-readable medium comprising a set of instructions, the set of instructions comprising:
one or more instructions that, when executed by one or more processors of a distribution point unit (DPU) associated with a fixed wireless access (FWA) deployment, cause the DPU to:
identify configuration information that indicates respective correspondences between a plurality of ports of the DPU and address identifiers of a plurality of access point devices;
determine that the plurality of ports of the DPU are connected to the plurality of access point devices; and
perform a verification operation to determine that the plurality of access point devices are connected to the plurality of ports in accordance with the configuration information.

9. The computer-readable medium of claim 8, wherein the one or more instructions, when executed by the one or more processors, further cause the DPU to:
obtain, from a client device associated with the FWA deployment, the configuration information.

10. The computer-readable medium of claim 8 or 9, wherein the one or more instructions, when executed by the one or more processors, further cause the DPU to:
obtain, based on the configuration information, respective Internet protocol (IP) addresses associated with the plurality of access point devices; and
transmit, via respective connections between the plurality of ports of the DPU and the plurality of access point devices, the respective IP addresses to the plurality of access point devices;
wherein, for example, the one or more instructions, that cause the DPU to obtain the respective IP addresses, cause the DPU to: transmit, to a core network, a first dynamic host configuration protocol (DHCP) message that includes information that indicates a particular port of the plurality of ports of the DPU; and receive, based on transmitting the first DHCP message, from the core network, a second DHCP message that includes a particular IP address, of the respective IP addresses, that is to be provided to a particular access point device, of the plurality of access point devices, that has an address identifier that corresponds to the particular port of the DPU.

11. The computer-readable medium of any of claims 8 to 10, wherein the one or more instructions, when executed by the one or more processors, further cause the DPU to:
identify that the DPU is connected to at least a first FWA gateway associated with a first core network and a second FWA gateway associated with a second core network;
and for example, wherein the configuration information further indicates that address identifiers of a first set of one or more access point devices, of the plurality of access point devices, are associated with the first core network and that address identifiers of a second set of one or more access point devices, of the plurality of access point devices, are associated with the second core network, wherein the one or more instructions, when executed by the one or more processors, further cause the DPU to: communicate, with the first core network, via the first FWA gateway, and based on the configuration information, to obtain a first set of one or more IP addresses for the first set of one or more access point devices; and communicate, with the second core network, via the second FWA gateway, and based on the configuration information, to obtain a second set of one or more IP addresses for the second set of one or more access point devices;
and, for example, wherein the one or more instructions, when executed by the one or more processors, further cause the DPU to: transmit the first set of one or more IP addresses to the first set of one or more access point devices; and transmit the second set of one or more IP addresses to the second set of one or more access point devices.

12. A method, comprising:
obtaining, by a distribution point unit (DPU) associated with a fixed wireless access (FWA) deployment, respective Internet protocol (IP) addresses associated with a plurality of access point devices connected to a plurality of ports of the DPU; and
transmitting, by the DPU, via respective connections between the plurality of ports of the DPU and the plurality of access point devices, the respective IP addresses to the plurality of access point devices.

13. The method of claim 12, further comprising:
performing, prior to obtaining the respective IP addresses, a verification operation to determine that the plurality of access point devices are connected to the plurality of ports in accordance with configuration information that indicates respective correspondences between the plurality of ports of the DPU and address identifiers of the plurality of access point devices.

14. The method of claim 12 or 13, wherein obtaining the respective IP addresses comprises:
transmitting a first dynamic host configuration protocol (DHCP) message that includes information that indicates a particular port of the plurality of ports of the DPU; and
receiving, based on transmitting the first DHCP message, a second DHCP message that includes a particular IP address, of the respective IP addresses, that is to be provided to a particular access point device, of the plurality of access point devices, that has an address identifier that corresponds to the particular port of the DPU.

15. The method of claim 12, 13 or 14, wherein obtaining the respective IP addresses comprises:
communicating, via a first FWA gateway associated with a first core network, to obtain a first set of one or more IP addresses of the respective IP addresses; and
communicating, via a second FWA gateway associated with a second core network, to obtain a second set of one or more IP addresses of the respective IP addresses;
and for example wherein transmitting the respective IP addresses comprises: transmitting the first set of one or more IP addresses to a first set of one or more access point devices, of the plurality of access point devices, that are associated with the first core network; and transmitting the second set of one or more IP addresses to a second set of one or more access point devices, of the plurality of access point devices, that are associated with the second core network.
